# EUROPÄISCHE PATENTSCHRIFT

(11) **EP 1 403 134 B1**
(45) Veröffentlichungstag und Bekanntmachung des Hinweises auf die Patenterteilung: **12.03.2008**
(21) Anmeldenummer: 03021506.5
(22) Anmeldetag: 24.09.2003
(51) Int. Cl.: B65D 88/12, B60P 1/64, B60P 7/13, B60P 1/54

(54) **Nutzfahrzeug oder Nutzfahrzeuganhänger**
Utility vehicle or utility trailer
Véhicule utilitaire ou remorque utilitaire

(30) Priorität: 25.09.2002 AT 14412002
(43) Veröffentlichungstag der Anmeldung: 31.03.2004
(73) Patentinhaber: Holzknecht, Herbert, 6444 Längenfeld (AT)
(72) Erfinder: Holzknecht, Herbert, 6444 Längenfeld (AT)
(74) Vertreter: Hofinger, Stephan

(56) Entgegenhaltungen:
- WO-A-98/38115
- GB-A- 424 719
- GB-A- 2 236 518
- GB-A- 2 353 518
- US-B1- 6 210 088

## Beschreibung

Die vorliegende Erfindung betrifft ein Transportsystem mit einem Nutzfahrzeug oder einem Nutzfahrzeughänger, einem Wechselrahmen und einem abnehmbaren Aufbau, der unter Zwischenschaltung des Wechselrahmens auf dem Nutzfahrzeug oder dem Nutzfahrzeughängeraufgesetzt bzw. aufsetzbar ist, wobei der Wechselrahmen mit dem Nutzfahrzeug oder dem Nutzfahrzeughänger über wenigstens eine Befestigungsvorrichtung und mit dem Aufbau über wenigstens eine Verbindungseinrichtung lösbar verbunden ist.

Wechselaufbauten für Nutzfahrzeuge oder Nutzfahrzeughänger, die über einen Wechselrahmen mit dem Nutzfahrzeug oder Nutzfahrzeughänger lösbar verbunden sind, zählen zum Stand der Technik. So ist beispielsweise in der gattungsgemäßen EP 446 388 A1 eine Konstruktion gezeigt, bei der der Wechselrahmen Befestigungsvorrichtungen zur Verbindung mit einem Lastkraftwagen aufweist. An der Oberseite des Wechselrahmens sind andersartig gestaltete Verbindungsvorrichtungen angeordnet, über die unterschiedliche Aufbauten mit dem Wechselrahmen verbunden werden. Der Wechselrahmen erfüllt somit im wesentlichen eine Adapterfunktion, da eine direkte Befestigung der Aufbauten am Lastkraftwagen nicht möglich ist.

Die WO 98/38115 zeigt eine Stützvorrichtung für Container mit auf der Oberseite und Unterseite angeordneten, als Twist-Locks ausgebildeten Befestigungsmitteln zum Befestigen der Stützvorrichtung auf einem Fahrzeug und eines Containers auf der Stützvorrichtung. Weiters ist aus der GB 23 53 518 ein Sattelanhänger mit einem daran angeordneten Kran zum Beladen des Anhängers bekannt.

Im Gegensatz dazu ist es die Aufgabe der vorliegenden Erfindung, durch einen speziell ausgebildeten Wechselrahmen ein modulartiges Nutzfahrzeug oder einen modulartigen Nutzfahrzeughänger zu schaffen, der je nach Anwendungsfall kurzfristig und ohne großen Aufwand umrüstbar und anpassbar ist.

Dies wird erfindungsgemäß dadurch erreicht, dass am Wechselrahmen eine Hebeeinrichtung, vorzugsweise ein Kran, zum Beladen oder Wechseln des Aufbaus angeordnet ist, wobei eine vorteilhafte Lösung erreicht wird, wenn die dem Nutzfahrzeug oder dem Nutzfahrzeuganhänger zugeordneten Elemente der Befestigungsvorrichtung und die dem Aufbau zugeordneten Elemente der Verbindungseinrichtung kompatibel ausgebildet sind.

Auf diese Weise wird erreicht, dass der Aufbau wahlweise entweder direkt auf das Nutzfahrzeug oder den Nutzfahrzeughänger aufgesetzt und dort befestigt werden kann oder indirekt unter Zwischenschaltung des Wechselrahmens.

Dadurch, dass am Wechselrahmen eine Hebeeinrichtung, vorzugsweise ein Kran, zum Beladen oder Wechseln des Aufbaus angeordnet ist, stellt der Wechselrahmen mit der darauf angeordneten Hebeeinrichtung eine selbständige Funktionseinheit dar, auf der ein weiterer Aufbau, beispielsweise ein Dreiseitenkipper, montiert werden kann, sodass sich insgesamt ein Nutzfahrzeug mit einer Hebeeinrichtung und einem Dreiseitenkipper ergibt. Die vorzugsweise als Kran ausgebildete Hebeeinrichtung kann dabei den Dreiseitenkipper auf den Wechselrahmen aufsetzen und anschließend beladen. Wird der Kran nicht benötigt, kann der Seitenkipper unter Weglassung des Wechselrahmens über die Verbindungseinrichtung, die kompatibel zur Befestigungsvorrichtung zwischen dem Wechselrahmen und dem Nutzfahrzeug ausgebildet ist, direkt auf dem Nutzfahrzeug angeordnet werden. Aufgrund des eingesparten Gewichts von Wechselrahmen und Hebeeinrichtung kann der Dreiseitenkipper nunmehr mit höheren Lasten beladen werden.

Um die Entfernung des Wechselrahmens vom Nutzfahrzeug oder Nutzfahrzeughänger zu erleichtern, ist vorzugsweise weiters vorgesehen, dass am Wechselrahmen eine Hubeinrichtung, vorzugsweise im wesentlichen vertikal ausfahrbare Stützen, zum vertikalen Verfahren des Wechselrahmens gegenüber dem Nutzfahrzeug oder Nutzfahrzeughänger angeordnet ist. Am Abstellplatz wird der Wechselrahmen durch Ausfahren der Stützen vom Nutzfahrzeug oder Nutzfahrzeughänger gelöst, wonach dieser wegfahren kann und der Wechselrahmen selbständig stehen bleibt.

Eine besonders bevorzugte Ausführungsform sieht dabei vor, dass der Wechselrahmen mittels der Befestigungsvorrichtung wahlweise in zwei verschiedenen Montagelagen auf dem Nutzfahrzeug oder Nutzfahrzeughänger befestigbar ist, wobei die Hebeeinrichtung in einer ersten Montagelage in Fahrtrichtung weist und in einer zweiten Montagelage gegen die Fahrtrichtung weist. Die wahlweise Anordnung der Hebeeinrichtung vorne oder hinten erhöht deren universelle Einsetzbarkeit.

Weitere Merkmale und Einzelheiten der vorliegenden Erfindung werden nachfolgend anhand der Figurenbeschreibung näher erläutert. Dabei zeigt:
- Fig. 1: schematisch das erfindungsgemäße Nutzfahrzeug samt Wechselrahmen,
- Fig. 2a: skizzenhaft eine Draufsicht auf das Nutzfahrzeug,
- Fig. 2b: skizzenhaft eine Untersicht des Wechselrahmens,
- Fig. 3: schematisch eine Seitenansicht eines Nutzfahrzeughängers,
- Fig. 3a bis 3c: verschiedene Ausführungsbeispiele von Befestigungsvorrichtungen,
- Fig. 5a bis 5d: beispielhaft einige Ausführungsmöglichkeiten für Aufbauten und
- Fig. 6: schematisch eine Untersicht auf die Aufbauten in den Fig. 5a bis 5c.

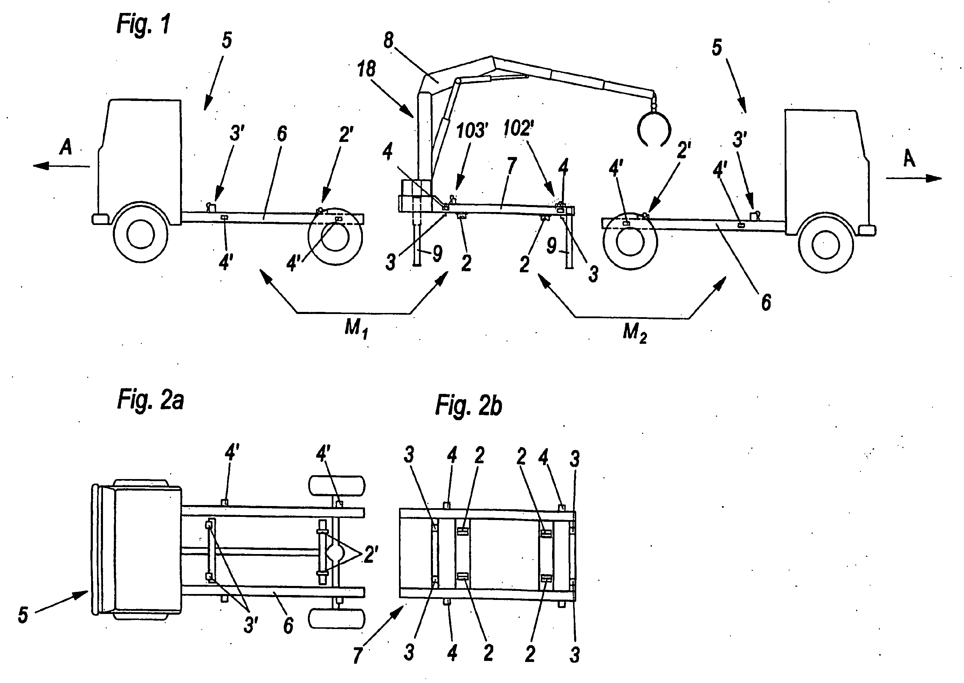

In Fig. 1 sind mit unterschiedlicher Fahrtrichtung A zwei Nutzfahrzeuge 5 dargestellt. Die Nutzfahrzeuge 5 weisen in ihrem Aufnahmebereich 6 Befestigungsvorrichtungen 2' und 3' auf.

Zwischen den Nutzfahrzeugen 5 ist ein erfindungsgemäßer Wechselrahmen 7 dargestellt. Der Wechselrahmen 7 ist an einer Stirnseite 18 mit einer Hebeeinrichtung 8 in Form eines Krans versehen.

An der Unterseite des Wechselrahmens 7 ist zudem eine Hubeinrichtung 9 in Form ausfahrbarer Stützen vorgesehen, wodurch der Wechselrahmen 7 selbständig abgestellt werden kann.

Der Wechselrahmen 7 weist an seiner Unterseite zudem doppelt so viele Befestigungsvorrichtungen 2 und 3 auf wie das Nutzfahrzeug 5, die zudem zur Hälfte spiegelverkehrt angeordnet sind. Somit kann das Nutzfahrzeug 5 von zwei gegenüberliegenden Seiten her unter den Wechselrahmen 7 einfahren, wonach die korrespondierenden Teile der Befestigungsvorrichtungen 2, 3, 2' und 3' miteinander in Eingriff gebracht werden (Montagelagen M₁ und M₂). Zusätzlich zu den innerhalb des Wechselrahmen 7 angeordneten Befestigungsvorrichtungen 2, 3, 2' und 3' können an der Außenseite des Wechselrahmens 7 Befestigungselemente 4 angeordnet sein, die mit auf dem Nutzfahrzeug 5 angeordneten Befestigungselementen 4' zur zusätzlichen Absicherung und Befestigung verbindbar sind, wie dies die Fig. 2a und 2b zeigen.

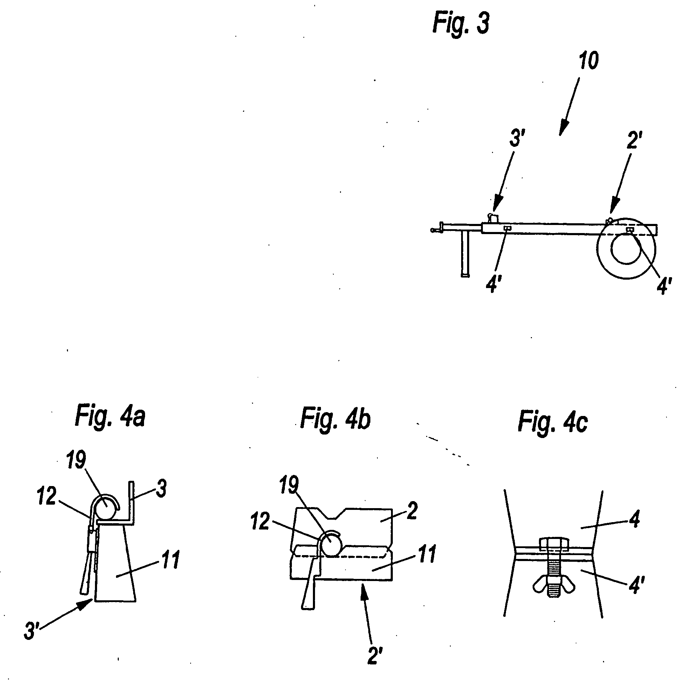

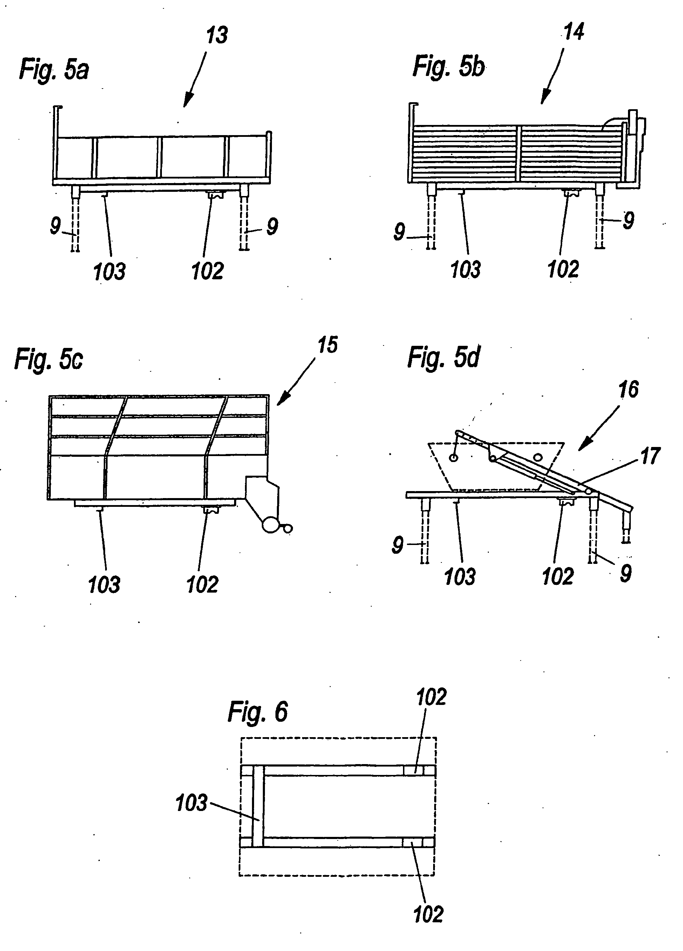

Wesentlich für die vorliegende Erfindung ist, dass der in Fig. 1 gezeigte Wechselrahmen 7 an der Oberseite Verbindungseinrichtungen 102' und 103' aufweist, die kompatibel mit den Befestigungsvorrichtungen 2, 3, 2' und 3' sind. Auf diese Weise können die in den Fig. 5a bis 5d gezeigten Aufbauten 13, 14, 15 und 16 entweder direkt auf das Nutzfahrzeug 5 oder den in Fig. 3 gezeigten Nutzfahrzeughänger 10 aufgesetzt werden oder unter Zwischenschaltung des Wechselrahmens 7. Die Verbindungseinrichtungen 102 und 103 an der Unterseite der Aufbauten 13, 14, 15 und 16 entsprechend den Befestigungsvorrichtungen 2 und 3 an der Unterseite des Wechselrahmens 7. Auch bei den Verbindungseinrichtungen 102 und 103 an den Aufbauten 13, 14, 15 und 16 wäre eine spiegelverkehrte Verdoppelung denkbar, um die Aufbauten 13, 14, 15 und 16 wahlweise in oder gegen die Fahrtrichtung A aufsetzen zu können.

Die Fig. 4a bis 4c zeigen einige Ausführungsmöglichkeiten für Befestigungsvorrichtungen bzw. Verbindungseinrichtungen. Fig. 4a zeigt eine Schnellkupplungseinrichtung, deren L-förmiger Teil 3 dem nicht dargestellten Wechselrahmen 7 zugeordnet ist. Der dem Nutzfahrzeug 5 zugeordnete Teil 3' weist einen Anschlag 11 für den L-förmigen Teil 3 auf. An diesem Anschlag 11 ist ein hakenförmiges Element 12 angelenkt, das zum Umgreifen einer mit dem L-förmigen Teil 3 fest verbundenen Stange 19 ausgebildet ist. Eine nach demselben Prinzip funktionierende Vorrichtung ist in Fig. 4b dargestellt, wobei die Teile 2 und 2' der Vorrichtung abweichende Formen aufweisen. Fig. 4c zeigt darüber hinaus die Verschraubung der Befestigungselemente 4 und 4'.

In den Fig. 5a bis 5d sind folgende mögliche Aufbauten dargestellt, ohne dass darin eine Einschränkung gesehen werden sollte: ein Kipper 13, ein Miststreuer 14, Ladewagen 15 und eine Hebeeinrichtung für Kippmulden 16.

Wie aus Fig. 6 ersichtlich kann die Grundfläche der Aufbauten 13, 14 und 15 wesentlich größer als der Wechselrahmen 7 sein. Im wesentlichen kommt es nur darauf an, dass die Verbindungseinrichtungen 102 und 103 an der gleichen Stelle wie die Befestigungsvorrichtung 2 und 3 am Wechselrahmen und mit diesen kompatibel sind, dass die Aufbauten entweder direkt auf dem Nutzfahrzeug 5 oder dem Nutzfahrzeughänger 10 oder unter Zwischenschaltung des Wechselrahmens 7 angeordnet werden können. Die Entscheidung darüber wird primär davon abhängen, ob die mit dem Wechselrahmen 7 verbundene Hebeeinrichtung 8 zum Be- und Entladen oder Wechseln des Aufbaus gerade benötigt wird oder lediglich unnötigen Ballast darstellt.

## Patentansprüche

1. Transportsystem mit einem Nutzfahrzeug (5) oder einem Nutzfahrzeughänger (10), einem Wechselrahmen (7) und einem abnehmbaren Aufbau (13, 14, 15, 16), der unter Zwischenschaltung des Wechselrahmens (7) auf dem Nutzfahrzeug (5) oder dem Nutzfahrzeughänger (10) aufgesetzt bzw. aufsetzbar ist, wobei der Wechselrahmen (7) mit dem Nutzfahrzeug (5) oder dem Nutzfahrzeughänger (10) über wenigstens eine Befestigungsvorrichtung (2, 3, 2', 3') und mit dem Aufbau (13, 14, 15, 16) über wenigstens eine Verbindungseinrichtung (102, 103, 102', 103') lösbar verbunden ist, **dadurch gekennzeichnet, dass** am Wechselrahmen (7) eine Hebeeinrichtung (8), vorzugsweise ein Kran, zum Beladen oder Wechseln des Aufbaus (13, 14, 15, 16) angeordnet ist.

2. Transportsystem nach Anspruch 1, **dadurch gekennzeichnet, dass** die Befestigungsvorrichtung (2, 3, 2', 3') zwischen dem Nutzfahrzeug (5) oder Nutzfahrzeughänger (10) und dem Rahmen (7) kompatibel mit der Verbindungseinrichtung (102, 103, 102', 103') zwischen dem Rahmen (7) und dem Aufbau (13, 14, 15, 16) ausgebildet ist.

3. Transportsystem nach Anspruch 1 oder 2, **dadurch gekennzeichnet, dass** die Hebeeinrichtung (8) an einem stirnseitigen Ende (18) des Wechselrahmens (7) angeordnet ist.

4. Transportsystem nach einem der Ansprüche 1 bis 3, **dadurch gekennzeichnet, dass** die Befestigungsvorrichtung (2, 3, 2', 3') als Schnellkupplungseinrichtung ausgebildet ist.

5. Transportsystem nach einem der Ansprüche 1 bis 4, **dadurch gekennzeichnet, dass** am Wechselrahmen (7) eine Hubeinrichtung (9), vorzugsweise im wesentlichen vertikal ausfahrbare Stützen, zum vertikalen Verfahren des Wechselrahmens (7) gegenüber dem Nutzfahrzeug (5) oder Nutzfahrzeughänger (10) angeordnet ist.

6. Transportsystem nach einem der Ansprüche 1 bis 5, **dadurch gekennzeichnet, dass** der Wechselrahmen (7) mittels der Befestigungsvorrichtung (2, 3, 2', 3') wahlweise in zwei verschiedenen Montagelagen (M₁, M₂) auf dem Nutzfahrzeug (5) oder dem Nutzfahrzeughänger (10) befestigbar ist, wobei die Hebeeinrichtung (8) in einer ersten Montagelage (M₁) in Fahrtrichtung (A) weist und in einer zweiten Montagelage (M₂) gegen die Fahrtrichtung (A) weist.

## Claims

1. A transport system comprising a utility vehicle (5) or a utility vehicle trailer (10), a alternate frame (7) and a removable superstructure (13, 14, 15, 16) which is or can be placed on the utility vehicle (5) or the utility vehicle trailer (10) with the interposition of the alternate frame (7), wherein the alternate frame (7) is releasably connected to the utility vehicle (5) or the utility vehicle trailer (10) by way of at least one fixing device (2, 3, 2', 3') and to the superstructure (13, 14, 15, 16) by way of at least one connecting device (102, 103, 102', 103'), **characterised in that** a lifting device (8), preferably a crane, is arranged on the alternate frame (7) for loading or changing the superstructure (13, 14, 15, 16).

2. A transport system according to claim 1 **characterised in that** the fixing device (2, 3, 2', 3') between the utility vehicle (5) or the utility vehicle trailer (10) and the frame (7) is compatible with the connecting device (102, 103, 102', 103') between the frame (7) and the superstructure (13, 14, 15, 16).

3. A transport system according to claim 1 or claim 2 **characterised in that** the lifting device (8) is arranged at a front end (18) of the alternate frame (7).

4. A transport system according to one of claims 1 to 3 **characterised in that** the fixing device (2, 3, 2', 3') is in the form of a quick coupling device.

5. A transport system according to one of claims 1 to 4 **characterised in that** a lifting device (9), preferably substantially vertically extendable supports, is arranged on the alternate frame (7) for vertical displacement of the alternate frame (7) with respect to the utility vehicle (5) or the utility vehicle trailer (10).

6. A transport system according to one of claims 1 to 5 **characterised in that** the alternate frame (7) can be fixed by means of the fixing device (2, 3, 2', 3') selectively in two different mounting positions (M₁, M₂) on the utility vehicle (5) or the utility vehicle trailer (10), wherein the lifting device (9) faces in the direction of travel (A) in a first mounting position (M₁) and in opposite relationship to the direction of travel (A) in a second mounting position (M₂).

## Revendications

1. Système de transport avec un véhicule utilitaire (5) ou une remorque utilitaire (10), un châssis interchangeable (7) et une structure amovible (13, 14, 15, 16), qui est et/ou peut être placée sous un intercalage du châssis interchangeable (7) sur le véhicule utilitaire (5) ou sur la remorque utilitaire (10), le châssis interchangeable (7) étant relié de façon à pouvoir être libéré au véhicule utilitaire (5) ou à la remorque utilitaire (10) par le biais au moins d'un dispositif de fixation (2, 3, 2', 3') et à la structure (13, 14, 15, 16) par le biais au moins d'un dispositif de liaison (102, 103, 102', 103'), **caractérisé en ce qu'**un dispositif de levage (8), de préférence une grue, est disposé au châssis interchangeable (7) pour charger ou changer la structure (13, 14, 15, 16).

2. Système de transport selon la revendication 1, **caractérisé en ce que** le dispositif de fixation (2, 3, 2', 3') entre le véhicule utilitaire (5) ou la remorque utilitaire (10) et le châssis (7) est réalisé de manière à être compatible avec le dispositif de liaison (102, 103, 102', 103') entre le châssis (7) et la structure (13, 14, 15, 16).

3. Système de transport selon la revendication 1 ou 2, **caractérisé en ce que** le dispositif de levage (8) est disposé à une extrémité du côté frontal (18) du châssis interchangeable (7).

4. Système de transport selon l'une quelconque des revendications 1 à 3, **caractérisé en ce que** le dispositif de fixation (2, 3, 2', 3') est réalisé comme un dispositif de raccord rapide.

5. Système de transport selon l'une quelconque des revendications 1 à 4, **caractérise en ce qu'**un dispositif de levage (9), de préférence des supports déplaçables essentiellement de manière verticale, est disposé au châssis interchangeable (7) pour déplacer verticalement le châssis interchangeable (7) par rapport au véhicule utilitaire (5) ou à la remorque utilitaire (10).

6. Système de transport selon l'une quelconque des revendications 1 à 5, **caractérisé en ce que** le châssis interchangeable (7) peut être fixé au moyen du dispositif de fixation (2, 3, 2', 3') au choix dans deux positions de montage (M₁, M₂) différentes sur le véhicule utilitaire (5) ou sur la remorque utilitaire (10), le dispositif de levage (8) allant dans une première position de montage (M₁) dans le sens de la marche (A) et, dans une seconde position de montage (M₂), dans le sens inverse de la marche (A).
